# EUROPÄISCHE PATENTSCHRIFT

(11) **EP 0 471 160 B1**
(45) Veröffentlichungstag und Bekanntmachung des Hinweises auf die Patenterteilung: **13.04.1994**
(21) Anmeldenummer: 91109429.0
(22) Anmeldetag: 08.06.1991
(51) Int. Cl.: B41F 13/00, F16H 55/18

(54) **Zahnrad für den Antrieb der Zylinder von Offsetdruckmaschinen**
Toothed wheel for driving the cylinders of offset printing machines
Roue dentée pour l'entraînement des cylindres des machines d'impression offset

(30) Priorität: 14.08.1990 DE 4025668
(43) Veröffentlichungstag der Anmeldung: 19.02.1992
(73) Patentinhaber: M.A.N.-ROLAND Druckmaschinen Aktiengesellschaft, 63012 Offenbach (DE)
(72) Erfinder: Dettinger, Dietrich, W-6056 Heusenstamm (DE); Mathes, Josef, W-6050 Offenbach/Main (DE)
(74) Vertreter: Marek, Joachim, Dipl.-Ing.

(56) Entgegenhaltungen:
- DE-B- 1 650 784
- DE-C- 274 628
- DE-C- 3 834 429
- FR-A- 1 592 601

## Beschreibung

Die Erfindung betrifft Zahnräder für den Antrieb der Zylinder von Offsetdruckmaschinen, die Verspanneinrichtungen zum Deformieren des Zahnkranzes der Zahnräder aufweisen.

Durch die DE-AS 1 650 784 sind bereits Verspanneinrichtungen zum Deformieren des Zahnkranzes eines Zahnrades für den Antrieb der Zylinder von Offsetdruckmaschinen bekannt, die zusätzlichen Radkörper des Zahnrades untergebracht sind. Bei dieser Lösungsvariante wird das Zahnrad an einer Stelle oder an zwei Stellen partiell verformt. Diese Verspannvorrichtungen üben eine Verspann- oder Verstellkraft nur radialer Richtung aus, wobei die Spannvorrichtung als axial verstellbarer Keil oder als eine radial verstellbare Spannschraube ausgebildet ist.

Des weiteren ist aus der DE-PS 2 829 026 ein Antrieb bekanntgeworden, dessen schrägverzahnte Stirnzahnräder koaxial zu jedem Stirnzahnrad eine Spannscheibe aufweisen, an der zwei oder mehr in axialer Richtung auf den Zahnkranz des Zahnrades einwirkende Spannvorrichtungen angebracht sind. Durch eine elastische Verformung des schrägverzahnten Zahnkranzes in axialer Richtung ergibt sich ein zur Spieleinstellung genutzter Verstellweg in Umfangsrichtung, wobei gegebenenfalls die Verzahnung beim Verspannen verkippt wird.

Aufgabe der Erfindung ist es, Verspannvorrichtungen zum Deformieren des Zahnkranzes eines Zahnrades für den Antrieb der Zylinder von Offsetdruckmaschinen zu schaffen, die auf konstruktiv einfache Weise eine partielle zylindrisch ballige Verformung und eine Durchmesservergrößerung des Zahnkranzes ermöglichen.

Gelöst wird diese Aufgabe mit den Maßnahmen des Patentanspruches 1.

Mit der Erfindung wird im angegebenen Anwendungsfall eine Beseitigung von Zahnspiel und/oder Rundlauffehlern erreicht, in dem der Zahnkranz mittels unterschiedlich gespannter axialer Spannvorrichtungen über einen Spannring mit Innenkonus, der radial nach außen einwirkt, im Tausendstel bis Hundertstel mm-Bereich deformiert werden kann, bis einwandfreie Passerdrucke mit der Offsetdruckmaschine ausgeführt werden können.

Vorteilhafte Ausgestaltungen der Erfindung sind in einem Unteranspruch angegeben.

Die Weiterbildung der Erfindung nach Anspruch 2 ermöglicht wegen der Verwendung einer Vielzahl in axialer Richtung vorgesehener Spannschrauben sowohl eine partielle Deformation als auch eine einigermaßen runde Durchmesservergrößerung des Radkranzes des betreffenden Zahnrades. Zusätzlich wird durch die leicht ballige Vergrößerung eine erhöhte Laufgenauigkeit erzielt.

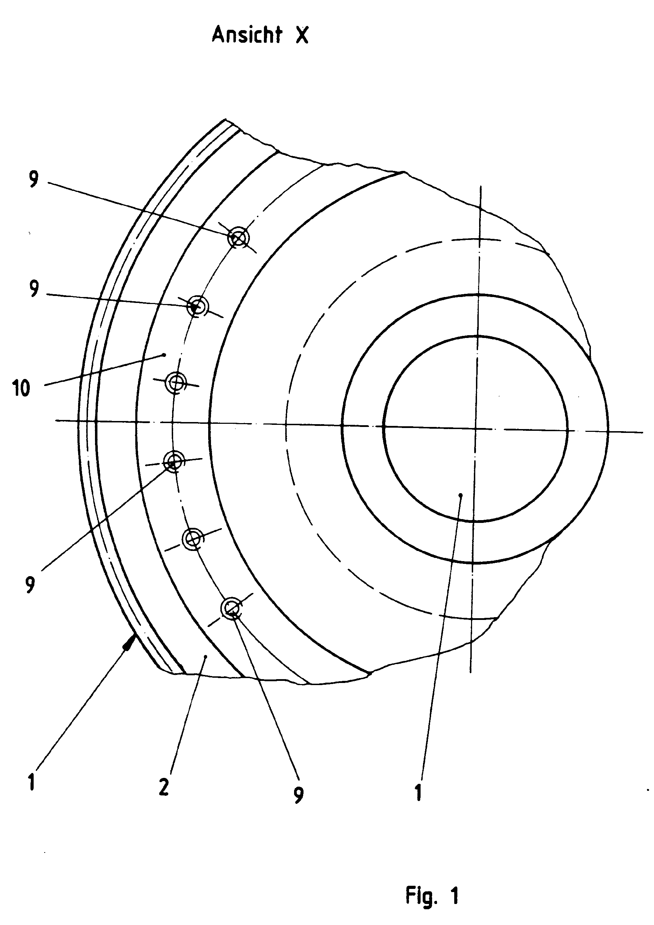

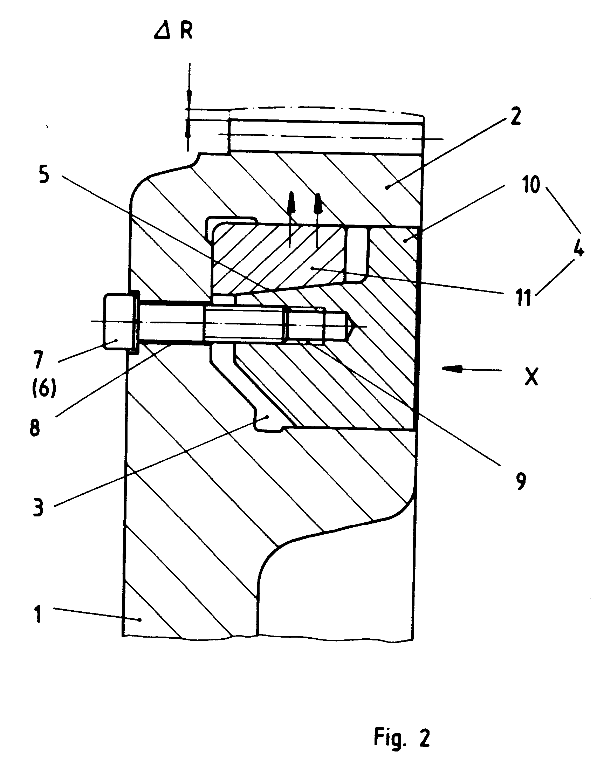

Ein Ausführungsbeispiel der Erfindung wird anhand der Figuren 1 und 2 erläutert.

Es zeigen:
- Fig. 1: eine Teildraufsicht auf ein erfindungsgemäß gestaltetes Zahnrad,
- Fig. 2: einen Radialschnitt durch den Zahnkranz des Zahnrades, nach Fig. 1.

Weist eines der Zahnräder 1 für den Antrieb der Zylinder von Offsetdruckmaschinen einen Fehler auf, so wird dem Räderzug ein unsynchroner Lauf aufgezwungen. Zur Beseitigung dieses Drehfehlers muß mindestens ein erfindungsgemäß ausgebildetes Zahnrad 1 im Räderzug vorgesehen werden.

Für die Synchronisierung der Rotation der Zylinder der Offsetdruckmaschine besitzt gemäß den Fig. 1 und 2 somit der Zahnkranz 2 mindestens dieses Zahnrades 1 eine umlaufende Ringnut 3, die seitlich nach einer Seite offen eingebracht ist. Ebenfalls koaxial zum Zahnrad 1 ist in die Ringnut 3 des Zahnkranzes 2 ein aus zwei Körperteilen 10, 11 geteilter Spannring 4 mit Innenkonus 5 eingefügt. Am Spannring 4 sind auf einem Kreis regelmäßig verteilt in axialer Richtung einwirkend mehrere Spannvorrichtung 6 angebracht. Mit diesen Spannvorrichtungen 6 läßt sich über den Spannring 4 mit Innenkonus 5 eine Durchmesservergrößerung einigermaßen rund im Mikrometer bis Hundertstel-mm-Bereich erreichen. Außerdem bleibt die Möglichkeit der partiellen d.h. der örtlichen Deformation des Zahnkranzes 2 erhalten. Die Spannvorrichtungen 6 laufen jeweils mit dem Zahnrad 1 um und deformieren dessen Zahnkranz 2 je nach Einstellung mehr oder weniger unterschiedlich. Die Einstellung muß solange vorgenommen werden, bis einwandfreie Passerdrucke ausgeführt werden können.

Jede Spannvorrichtung 6 besteht in vorteilhafter Weise aus einer in axialer Richtung auf den Zahnkranz 2 einwirkenden Spannschraube 7, die an ihrem Schaft verschiebbar in einer Bohrung 8 des Zahnkranzes 2 geführt ist. Am Ende weist die Spannschraube 7 ein Gewinde auf, das mit einer Gewindebohrung 9 in dem einen, inneren Körperteil 10 des Spannringes 4 zusammenwirkt, wobei sich dieses Körperteil 10 mit zylindrischen Konturen radial in der Ringnut 3 und außerdem über den Innenkonus 5 an dem anderen, äußeren Körperteil 11 abstützt. Dieses andere, äußere Körperteil 11 des Spannringes 4 stützt sich mit seiner zylindrischen Außenkontur in radialer Richtung in der Ringnut 3 ab. Indem man die am Zahnkranz 2 seitlich abgestützte Spannschraube 7 in das innere Körperteil 10 des Spannringes 4 einschraubt, verschiebt sich dieser axial und erzeugt über den Innenkonus 5 eine radiale Verschiebung des Körperteiles 11 des Spannringes 4 und somit eine örtlich elastische radiale Deformation des Zahnrades 1, gegebenenfalls in Verbindung mit einem kegelförmigen balligen Aufspreizen (Δ R) des Zahnkranzes 2 an der ausgesparten Seite. Diese zusätzliche leicht ballige Deformation erfolgt wegen der Einwirkung des aufspreizenden Körperteils 11 auf den Zahnkranz 2 in der Mitte der Zahnbreite.

Der Kopf der Spannschraube 7 ist im gespannten Zustand an der Stirnseite des Zahnrades 1 abgestützt. Das innere Körperteil 10 des geteilten Spannringes 4 besitzt zusätzlich einen Außenring 12, der in der Ausgangsposition (0-Position) die Zahnflanken des Zahnkranzes 1 abstützt, so daß diese Ausgangsposition beim Verstellen leicht wiedergefunden werden kann.

### Bezugszeichenliste

- 1: Zahnrad
- 2: Zahnkranz
- 3: Ringnut
- 4: Spannring
- 5: Innenkonus
- 6: Spannvorrichtung
- 7: Spannschraube
- 8: Bohrung
- 9: Gewindebohrung
- 10: Körperteil
- 11: Körperteil

## Patentansprüche

1. Zahnrad (1) für den Antrieb der Zylinder von Offsetdruckmaschinen, mit einem Zahnkranz (2), der zur Synchronisation der Rotation der Zylinder eine umlaufende Ringnut (3) aufweist, in welcher ein aus zwei Körperteilen (10, 11) bestehender Spannring (4) mit Innenkonus (5) koaxial zum Zahnrad (1) einpressbar ist, wobei an dem Spannring (4) in axialer Richtung einwirkenden mehrere Spannvorrichtungen (6) angebracht sind, die mit dem Zahnrad (1) umlaufen und dessen Zahnkranz (2) je nach Einstellung mehr oder weniger mittels des Spannringes (4) mit Innenkonus (5) in radialer Richtung deformieren.

2. Zahnrad (1) nach Anspruch 1, mit einer als Spannvorrichtung (6) in axialer Richtung auf den Zahnkranz (2) einwirkenden Spannschraube (7), die in einer Bohrung (8) des Zahnkranzes (2) geführt ist und mit dem geteilten Spannring (4) zusammenwirkt, so daß sich beim Einschrauben der Spannschraube (7) in das innere Körperteil (10) dieses Körperteil (10) axial verschiebt und über den Innenkonus (5) durch das äußere Körperteil (11) infolge radialer Aufspreizung des Zahnkranzes (2) in der Mitte der Zahnbreite zugleich eine örtliche elastische radial ballige Deformation des Zahnrades (1) erzeugt.

## Claims

1. Toothed wheel (1) for driving the cylinders of offset printing presses with a tooth ring (2) which, for synchronisation of the rotation of the cylinder has a peripheral annular groove (3) into which can be pressed coaxially to the toothed wheel (1) a tensioning ring (4) consisting of two body parts (10, 11) with an inner cone (5), wherein several tensioning devices (6) are introduced into the tensioning ring (4) acting in the axial direction, which circulate with the toothed wheel (1) and deform its tooth ring (2) in the radial direction by more or less depending upon the adjustment of the tensioning ring (4) with inner cone (5).

2. Toothed wheel (1) according to Claim 1 with a tensioning screw (7) acting as tensioning device (6) in the axial direction on the tooth ring (2), which is guided in a bore (8) of the tooth ring (2) which cooperates with the divided tensioning ring (4) so that on screwing in the tensioning screw (7) into the inner body part (10) this body part (10) is axially displaced and via the inner cone (5) generates by the outer body part (11) as a result of radially spreading out of the tooth ring (2) in the middle of the tooth width, additionally a local elastic radial ball-like deformation of the toothed wheel (1).

## Revendications

1. Roue dentée (1) pour l'entraînement des cylindres de machines d'impression offset, comportant une couronne dentée (2) qui présente, pour la synchronisation de la rotation des cylindres, une gorge annulaire périphérique (3) dans laquelle peut être pressée, coaxialement à la roue dentée (1), une bague de serrage (4) à cône interne (5), constituée de deux parties de corps (10,11), plusieurs dispositifs de serrage (6) étant prévus agissant en direction axiale sur la bague de serrage (4), lesquels tournent avec la roue dentée (1) et déforment plus ou moins sa couronne dentée (2) selon le réglage, en direction radiale, au moyen de la bague de serrage (4) à cône interne (5).

2. Roue dentée (1) selon la revendication 1, comportant une vis de serrage (7) agissant en direction axiale sur la couronne dentée (2), constituant le dispositif de serrage (6), vis qui est guidée dans un perçage (8) de la couronne dentée (2) et coopère avec la bague de serrage divisée (4), de sorte que, lors du vissage de la vis de serrage (7) dans la partie de corps interne (10), cette partie de corps (10) se déplace axialement et, par l'intermédiaire du cône interne (5), par la partie de corps externe (11), du fait de l'élargissement radial de la couronne dentée (2) au milieu de la largeur des dents, engendre en même temps une déformation radialement convexe, élastique, locale de la roue dentée (1).
